# EUROPEAN PATENT APPLICATION

(11) **EP 4 799 842 A1**
(43) Date of publication of application: **02.09.2026**
(21) Application number: 26158516.0
(22) Date of filing: 13.02.2026
(51) Int. Cl.: B60K 11/02, B60K 1/00

(54) **COOLING SYSTEM AND VEHICLE**

(30) Priority: 14.02.2025 CN 202510168288
(71) Applicant: Valeo Automotive Air Conditioning Hubei Co. Ltd, Jingzhou, Hubei 434007 (CN)
(72) Inventor: FAN, Changsheng, Shashi, 434000 (CN); SUN, Jianqi, Shashi, 434000 (CN); PENG, Zijun, Shashi, 434000 (CN); ZUO, Sheng, Shashi, 434007 (CN); LIU, Zhigang4, Shashi, 434000 (CN); LI, Xiaojie, Shashi, 434000 (CN)
(74) Representative: Valeo Powertrain Systems

(57) **Abstract**

A cooling system and a vehicle. The cooling system includes: an inlet flow channel through which a cooling medium flows into the cooling system; an outlet flow channel through which the cooling medium flows out of the cooling system; a first set of cooling plates having a first inlet and a first outlet, the cooling medium flowing into the first set of cooling plates through the first inlet and out of the first set of cooling plates through the first outlet; a second set of cooling plates having a second inlet and a second outlet, the cooling medium flowing into the second set of cooling plates through the second inlet and out of the second set of cooling plates through the second outlet; and a distributor, via which the inlet flow channel is connected to each of the first inlet and the second inlet, and via which the outlet flow channel is connected to each of the first outlet and the second outlet.

## Description

### Technical Field

The present invention relates to a cooling system and a vehicle, and more particularly to a cooling system with optimized distribution of a cooling medium and a vehicle comprising the cooling system.

### Background Art

During operation of a vehicle, some electronic components (e.g., batteries) generate heat, which if not dissipated in a timely manner, may result in damage to the electronic components. Therefore, a cooling plate is arranged in the vehicle, and a cooling medium flows in the cooling plate to dissipate heat generated by the electronic components to the outside. However, in the prior art, the flow resistance of the cooling medium in the cooling plate may be relatively large, resulting in a poor cooling effect.

For this reason, it is desirable to propose a cooling system that can overcome the shortcomings in the prior art.

### Summary of the Invention

According to a first aspect of the present invention, a cooling system is provided, including: an inlet flow channel through which a cooling medium flows into the cooling system; an outlet flow channel through which the cooling medium flows out of the cooling system; a first set of cooling plates having a first inlet and a first outlet, the cooling medium flowing into the first set of cooling plates through the first inlet and out of the first set of cooling plates through the first outlet; a second set of cooling plates having a second inlet and a second outlet, the cooling medium flowing into the second set of cooling plates through the second inlet and out of the second set of cooling plates through the second outlet; and a distributor, via which the inlet flow channel is connected to each of the first inlet and the second inlet, and via which the outlet flow channel is connected to each of the first outlet and the second outlet.

According to this design, the cooling medium flowing through the first set of cooling plates and the second set of cooling plates can be distributed by the distributor, thereby facilitating the optimization of the distribution of the cooling medium. In addition, the first set of cooling plates and the second set of cooling plates are connected in parallel to each other via the distributor, reducing the flow resistance of the cooling medium flowing therein, thereby improving the cooling performance of the cooling system.

In some solutions, the distributor may include: an inlet flow channel interface connected to the inlet flow channel; a first inlet interface and a second inlet interface, which are in fluid communication with the inlet flow channel interface and connected to the first inlet and the second inlet, respectively; an outlet flow channel interface connected to the outlet flow channel; and a first outlet interface and a second outlet interface, which are in fluid communication with the outlet flow channel interface and connected to the first outlet and the second outlet, respectively.

In some solutions, the distributor may further include: a first inlet distribution flow channel connected to the first inlet interface; a second inlet distribution flow channel connected to the second inlet interface; a first outlet distribution flow channel connected to the first outlet interface; and a second outlet distribution flow channel connected to the second outlet interface, where an angle is formed between the first inlet distribution flow channel and the second inlet distribution flow channel, and an angle is formed between the first outlet distribution flow channel and the second outlet distribution flow channel.

According to this design, the first inlet distribution flow channel and the second inlet distribution flow channel can deliver the cooling medium in two different directions, and the first outlet distribution flow channel and the second outlet distribution flow channel can receive the cooling medium in two different directions, making the arrangement of the cooling plates more flexible.

In some solutions, the cooling system may further include a sealing block, where the inlet flow channel and the outlet flow channel are connected to the inlet flow channel interface and the outlet flow channel interface, respectively, via pipelines in the sealing block.

According to this design, the cooling medium can be prevented from leaking at the interfaces of the distributor by means of the sealing block.

In some solutions, the first set of cooling plates and the second set of cooling plates may each include a plurality of cooling plates arranged spaced apart in a first direction, each of the cooling plates extending in a second direction perpendicular to the first direction, and the distributor is located between the first set of cooling plates and the second set of cooling plates in the first direction.

In some solutions, the first set of cooling plates may include a first cooling plate and a second cooling plate, wherein the first cooling plate and the second cooling plate are arranged adjacent to each other, the first cooling plate is connected to the first inlet, and the second cooling plate is connected to the first outlet.

In some solutions, the first set of cooling plates may further include a third cooling plate, a fourth cooling plate, a fifth cooling plate, and a sixth cooling plate, wherein the third cooling plate and the fourth cooling plate are arranged adjacent to each other and connected in parallel to each other, and the fifth cooling plate and the sixth cooling plate are arranged adjacent to each other and connected in parallel to each other.

In some solutions, the first cooling plate may be connected in series with the fifth cooling plate and the sixth cooling plate, the fifth cooling plate and the sixth cooling plate may be connected in series with the third cooling plate and the fourth cooling plate, and the third cooling plate and the fourth cooling plate may be connected in series with the second cooling plate.

In some solutions, the cooling plate may have a corrugated structure.

According to this solution, the cooling plate has a relatively large surface area, thereby improving the heat transfer efficiency.

In some solutions, the first set of cooling plates may be arranged symmetrically with the second set of cooling plates.

In some solutions, the cooling medium is in a gas-liquid mixed state within the inlet flow channel and in a gaseous state within the outlet flow channel.

According to a second aspect of the present invention, a vehicle is provided, including the cooling system according to the first aspect of the present invention.

### Brief Description of the Drawings

Fig. 1 shows a schematic view of a cooling system according to an embodiment of the present invention;
Fig. 2 shows a schematic view of a distributor according to an embodiment of the present invention;
Fig. 3 shows a cross-sectional view of the distributor according to an embodiment of the present invention;
Fig. 4 shows another cross-sectional view of the distributor according to an embodiment of the present invention; and
Fig. 5 shows a schematic view of a sealing block according to an embodiment of the present invention.

### List of reference signs

100 Cooling system
102 First inlet
104 First outlet
110 First set of cooling plates
111 First cooling plate
112 Second cooling plate
113 Third cooling plate
114 Fourth cooling plate
115 Fifth cooling plate
116 Sixth cooling plate
120 Second set of cooling plates
130 Inlet flow channel
140 Outlet flow channel
150 Distributor
151 Inlet flow channel interface
152 Outlet flow channel interface
153 First inlet interface
154 Second inlet interface
155 First outlet interface
156 Second outlet interface
157-1 First inlet distribution flow channel
157-2 Second inlet distribution flow channel
158-1 First outlet distribution flow channel
158-2 Second outlet distribution flow channel
160 Sealing block
162 Inlet pipeline
164 Outlet pipeline
171 First flow guide pipe
172 Second flow guide pipe
173 Third flow guide pipe
174 Fourth flow guide pipe
175 Fifth flow guide pipe
176 Sixth flow guide pipe
177 Seventh flow guide pipe
181 First diversion pipe
182 Second diversion pipe
183 Third diversion pipe
184 Fourth diversion pipe
185 Fifth diversion pipe
186 Sixth diversion pipe
191 First flow guide block
192 Second flow guide block
193 Third flow guide block
194 Fourth flow guide block
195 Fifth flow guide block
196 Sixth flow guide block

### Detailed Description of Embodiments

In order to make the objectives, designs and advantages of the technical solutions of the present invention clearer, the technical solutions in the embodiments of the present invention will be clearly and completely described below with reference to the drawings of the specific embodiments of the present invention. Unless otherwise specified, the terms used herein have common meanings in the art. The same reference signs in the drawings refer to the same components.

For purposes of clarity of description, unless otherwise expressly stated, the directional terms used herein are defined as follows: the second direction refers to the direction of extension of each cooling plate, and the first direction is perpendicular to the second direction. A plurality of cooling plates are arranged spaced apart in the first direction. The directional terms "upper," "lower," "left," and "right" used herein are merely exemplary descriptions, and are not intended to limit the scope of protection of the present invention.

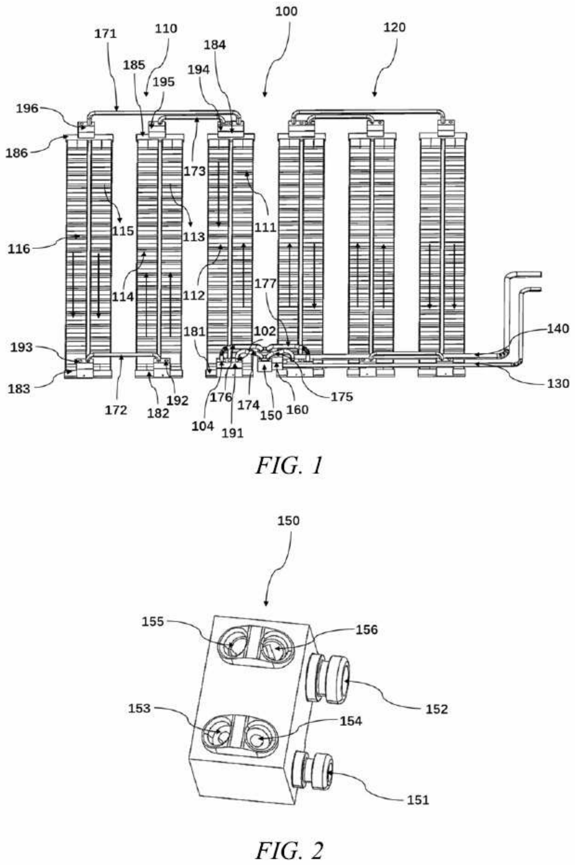

Fig. 1 shows a schematic view of a cooling system 100 according to an embodiment of the present invention. The cooling system 100 is configured to provide a heat dissipation function for an electronic component (e.g., a battery) in a vehicle. The cooling system 100 mainly includes a first set of cooling plates 110, a second set of cooling plates 120, an inlet flow channel 130 and an outlet flow channel 140. A cooling medium flows into the cooling system 100 through the inlet flow channel 130 and out of the cooling system 100 through the outlet flow channel 140, and the first set of cooling plates 110 and the second set of cooling plates 120 are arranged close to a component to be cooled, to provide a heat dissipation function to the component to be cooled.

The cooling medium may be in a gas-liquid mixed state within the inlet flow channel 130. As the cooling medium flows through the first set of cooling plates 110 and the second set of cooling plates 120, the cooling medium exchanges heat with the component to be cooled, and the cooling medium gradually absorbs heat and vaporizes so that the gaseous components of the cooling medium become gradually larger (even become completely gaseous). Finally, the cooling medium flows out of the cooling system 100 in gaseous form through the outlet flow channel 140.

As shown in Fig. 1, the first set of cooling plates 110 includes, in order from right to left, a first cooling plate 111, a second cooling plate 112, a third cooling plate 113, a fourth cooling plate 114, a fifth cooling plate 115 and a sixth cooling plate 116, each cooling plate 111, 112, 113, 114, 115, 116 extending in a vertical direction. The first cooling plate 111 is arranged adjacent to the second cooling plate 112, the third cooling plate 113 is arranged adjacent to the fourth cooling plate 114, and the fifth cooling plate 115 is arranged adjacent to the sixth cooling plate 116. The second cooling plate 112 is spaced apart from the third cooling plate 113, and the fourth cooling plate 114 is spaced apart from the fifth cooling plate 115. Preferably, the cooling plate 111, 112, 113, 114, 115, 116 may have a corrugated structure, thereby increasing its surface area and improving the heat dissipation efficiency.

As shown in Fig. 1, the cooling system 100 further includes a first flow guide pipe 171, a second flow guide pipe 172, and a third flow guide pipe 173, and the cooling system 100 further includes six sets of cooperating diversion pipes and flow guide blocks (a first diversion pipe 181 and a first flow guide block 191, a second diversion pipe 182 and a second flow guide block 192, a third diversion pipe 183 and a third flow guide block 193, a fourth diversion pipe 184 and a fourth flow guide block 194, a fifth diversion pipe 185 and a fifth flow guide block 195, and a sixth diversion pipe 186 and a sixth flow guide block 196). The first diversion pipe 181 and the second diversion pipe 184 are arranged on a lower side and an upper side of the first cooling plate 111 and the second cooling plate 112, respectively, and the second diversion pipe 182 and the fifth diversion pipe 185 are arranged on a lower side and an upper side of the third cooling plate 113 and the fourth cooling plate 114, respectively, and the third diversion pipe 183 and the sixth diversion pipe 186 are arranged on a lower side and an upper side of the fifth cooling plate 115 and the sixth cooling plate 116, respectively. The first flow guide pipe 171 communicates the right half of the fourth flow guide block 194 with the sixth flow guide block 196, the second flow guide pipe 172 communicates the third flow guide block 193 with the second flow guide block 192, and the third flow guide pipe 173 communicates the fifth flow guide block 195 with the left half of the fourth flow guide block 194.

The first diversion pipe 181 and the fourth diversion pipe 184 are each internally provided with a baffle, to prevent the flow of the cooling medium directly between the first cooling plate 111 and the second cooling plate 112 through the first diversion pipe 181 or the fourth diversion pipe 184. A flow pattern of the cooling medium in the first set of cooling plates 110 is described in detail below.

S1: The cooling medium first flows into the first flow guide block 191 through the first inlet 102, then flows from the right half of the first flow guide block 191 into the right half of the first diversion pipe 181 (as described above, the right half of the first diversion pipe 181 is not in communication with the left half thereof), subsequently flows from the right half of the first diversion pipe 181 into the first cooling plate 111, and then flows into the right half of the fourth flow guide block 194 through the right half of the fourth diversion pipe 184 (as described above, the right half of the fourth diversion pipe 184 is not in communication with the left half thereof).

S2: The cooling medium flows from the right half of the fourth flow guide block 194 through the first flow guide pipe 171 into the sixth flow guide block 196 and the sixth diversion pipe 186 in sequence, and then one part of the cooling medium flows into the fifth cooling plate 115 and the other part flows into the sixth cooling plate 116. The two parts then merge in the third diversion pipe 183 and flow into the third flow guide block 193.

S3: The cooling medium flows from the third flow guide block 193 through the second flow guide pipe 172 into the second flow guide block 192 and the second diversion pipe 182 in sequence, and then one part of the cooling medium flows into the third cooling plate 113 and the other part flows into the fourth cooling plate 114. The two parts then merge in the fifth diversion pipe 185 and flow into the fifth flow guide block 195.

S4: The cooling medium flows from the fifth flow guide block 195 through the third flow guide pipe 173 into the left half of the fourth flow guide block 194, then flows into the second cooling plate 112 through the left half of the fourth diversion pipe 184, then flows from the left half of the first flow guide pipe 191 into the left half of the first diversion pipe 181, and finally exits through the first outlet 104.

In summary, the flow sequence of the cooling medium in the first set of cooling plates 110 is as follows: the first inlet 102 → the right half of the first flow guide block 191 → the right half of the first diversion pipe 181 → the first cooling plate 111 → the right half of the fourth diversion pipe 184 → the right half of the fourth flow guide block 194 → the first flow guide pipe 171 → the sixth flow guide block 196 → the sixth diversion pipe 186 → the fifth cooling plate 115 and the sixth cooling plate 116 → the third diversion pipe 183 → the third flow guide block 193 → the second flow guide pipe 172 → the second flow guide block 192 → the second diversion pipe 182 → the third cooling plate 113 and the fourth cooling plate 114 → the fifth diversion pipe 185 → the fifth flow guide block 195 → the third flow guide pipe 173 → the left half of the fourth flow guide block 194 → the left half of the fourth diversion pipe 184 → the second cooling plate 112 → the left half of the first diversion pipe 181 → the left half of the first flow guide block 191 → the first outlet 104.

The second set of cooling plates 120 may be arranged symmetrically with the first set of cooling plates 110, and therefore will not be described again herein. The above arrangement of the cooling plates is exemplary only, and any other suitable arrangement of the cooling plates can be designed according to the specific application requirements.

As shown in Fig. 1, the cooling system further includes a distributor 150. The distributor 150 is located between the first set of cooling plates 110 and the second set of cooling plates 120 in a left-right direction. The inlet flow channel 130 is connected to each of the first inlet 102 of the first set of cooling plates 110 and the second inlet of the second set of cooling plates 120 via the distributor 150, and the outlet flow channel 140 is connected to each of the first outlet 104 of the first set of cooling plates 110 and the second outlet of the second set of cooling plates 120 via the distributor 150. The cooling medium can be distributed by the distributor 150 to flow through the first set of cooling plates 110 and the second set of cooling plates 120, thereby facilitating the optimization of the distribution of the cooling medium. In addition, the first set of cooling plates 110 and the second set of cooling plates 120 are connected in parallel to each other via the distributor 150, reducing the flow resistance of the cooling medium flowing therein, thereby improving the cooling performance of the cooling system 100.

As shown in Fig. 2, the distributor 150 includes an inlet flow channel interface 151, an outlet flow channel interface 152, a first inlet interface 153, a second inlet interface 154, a first outlet interface 155, and a second outlet interface 156. The inlet flow channel interface 151 and the outlet flow channel interface 152 are connected to the inlet flow channel 130 and the outlet flow channel 140, respectively, the first inlet interface 153 and the second inlet interface 154 are in fluid communication with the inlet flow channel interface 151, and the first outlet interface 155 and the second outlet interface 156 are in fluid communication with the outlet flow channel interface 152. In addition, it can be seen with reference to Fig. 1 that the first inlet interface 153 is connected to the first inlet 102 of the first set of cooling plates 110 via a fourth flow guide pipe 174, the second inlet interface 154 is connected to the second inlet of the second set of cooling plates 120 via a fifth flow guide pipe 175, the first outlet interface 155 is connected to the first outlet 104 of the first set of cooling plates 110 via a sixth flow guide pipe 176, and the second outlet interface 156 is connected to the second outlet of the second set of cooling plates 120 via a seventh flow guide pipe 177.

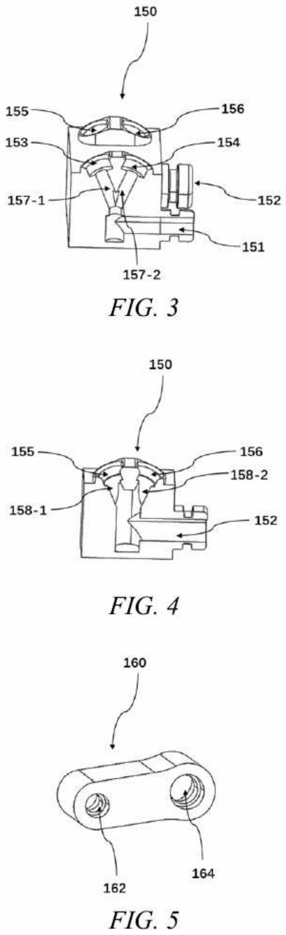

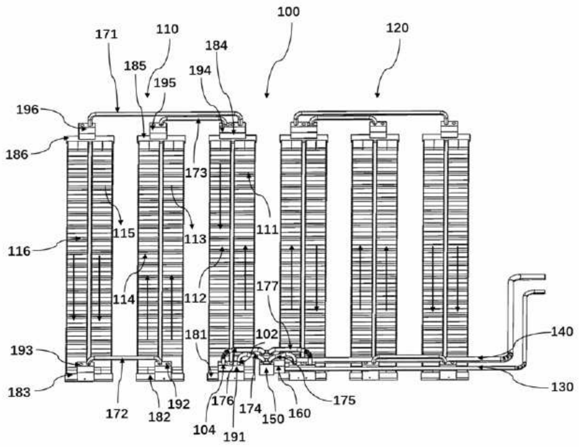

As shown in Figs. 3 and 4, the distributor 150 further includes a first inlet distribution flow channel 157-1, a second inlet distribution flow channel 157-2, a first outlet distribution flow channel 158-1, and a second outlet distribution flow channel 158-2. The first inlet distribution flow channel 157-1 is connected to the first inlet interface 153, the second inlet distribution flow channel 157-2 is connected to the second inlet interface 154, the first outlet distribution flow channel 158-1 is connected to the first outlet interface 155, and the second outlet distribution flow channel 158-2 is connected to the second outlet interface 156. A flow pattern of the cooling medium in the distributor 150 is described in detail below.

The cooling medium in the inlet flow channel 130 first flows into the distributor 150 through the inlet flow channel interface 151. One part of the cooling medium then flows through the first inlet distribution flow channel 157-1 to the first inlet interface 153, and then through the fourth flow guide pipe 174 into the first inlet 102 of the first set of cooling plates 110 to enter the first set of cooling plates 110 for heat exchange with an electronic component to be cooled, and the cooling medium that completes heat exchange in the first set of cooling plates 110 subsequently exits the first set of cooling plates 110 through the first outlet 104 of the first set of cooling plates 110, flows through the sixth flow guide pipe 176 to the first outlet interface 155 of the distributor 150, then flows through the first outlet distribution flow channel 158-1 to the outlet flow channel interface 152, and finally enters the outlet flow channel 140 through the outlet flow channel interface 152.

The other part of the cooling medium flows through the second inlet distribution flow channel 157-2 to the second inlet interface 154, and then through the fifth flow guide pipe 175 into the second inlet of the first set of cooling plates 120 to enter the second set of cooling plates 120 for heat exchange with the electronic components to be cooled, and the cooling medium that completes heat exchange in the second set of cooling plates 120 subsequently exits the second set of cooling plates 120 through the second outlet of the second set of cooling plates 120, flows through the seventh flow guide pipe 177 to the second outlet interface 156 of the distributor 150, then flows through the second outlet distribution flow channel 158-2 to the outlet flow channel interface 152, and finally enters the outlet flow channel 140 through the outlet flow channel interface 152.

In summary, the flow sequence of the cooling medium in the cooling system 100 is as follows:
For the first part of the cooling medium, the inlet flow channel 130 → the inlet flow channel interface 151 → the first inlet distribution flow channel 157-1 → the first inlet interface 153 → the fourth flow guide pipe 174 → the first inlet 102 → the first set of cooling plates 110 → the first outlet 104 → the sixth flow guide pipe 176 → the first outlet interface 155 → the first outlet distribution flow channel 158-1 → the outlet flow channel interface 152 → the outlet flow channel 140.

For the second part of the cooling medium, the inlet flow channel 130 → the inlet flow channel interface 151 → the second inlet distribution flow channel 157-2 → the second inlet interface 154 → the fifth flow guide pipe 175 → the second inlet → the second set of cooling plates 120 → the second outlet → the seventh flow guide pipe 177 → the second outlet interface 156 → the second outlet distribution flow channel 158-2 → the outlet flow channel interface 152 → the outlet flow channel 140.

The first and second parts of the cooling medium are split at inlet ends of the first inlet distribution flow channel 157-1 and the second inlet distribution flow channel 157-2, and merge at outlet ends of the first outlet distribution flow channel 158-1 and the second outlet distribution flow channel 158-2. An angle α1 may be formed between the first inlet distribution flow channel 157-1 and the second inlet distribution flow channel 157-2, and an angle α2 may be formed between the first outlet distribution flow channel 158-1 and the second outlet distribution flow channel 158-2. For example, α1 = α2 = 30°, but it should be understood that the above-mentioned value is merely exemplary, and the angles α1 and α2 can be appropriately selected according to the specific application requirements. In addition, α1 and α2 may be either equal or unequal.

Preferably, as shown in Fig. 1, the cooling system 100 may further include a sealing block 160. As shown in Fig. 5, the sealing block 160 may include an inlet pipeline 162 and an outlet pipeline 164. The inlet flow channel 130 and the outlet flow channel 140 are connected to the inlet flow channel interface 151 and the outlet flow channel interface 152, respectively, via the inlet pipeline 162 and the outlet pipeline 164 of the sealing block 160. The sealing block 160 may be fixed to the distributor 150 by welding (e.g., brazing), and the cooling medium can be prevented from leaking at the interfaces of the distributor 150 by means of the sealing block 160.

Multiple exemplary implementations of the present invention have been described in detail herein with reference to preferred embodiments. However, those skilled in the art will understand that, without departing from the concept of the present invention, various alterations and modifications may be made to the specific embodiments described above, and that combinations of the various technical features and structures provided in the present invention may be made without exceeding the scope of protection of the present invention. The scope of protection of the present invention is defined by the appended claims.

## Claims

1. A cooling system, **characterized by** comprising
an inlet flow channel through which a cooling medium flows into the cooling system;
an outlet flow channel through which the cooling medium flows out of the cooling system;
a first set of cooling plates having a first inlet and a first outlet, the cooling medium flowing into the first set of cooling plates through the first inlet and out of the first set of cooling plates through the first outlet;
a second set of cooling plates having a second inlet and a second outlet, the cooling medium flowing into the second set of cooling plates through the second inlet and out of the second set of cooling plates through the second outlet; and
a distributor, via which the inlet flow channel is connected to each of the first inlet and the second inlet, and via which the outlet flow channel is connected to each of the first outlet and the second outlet.

2. The cooling system as claimed in claim 1, **characterized in that** the distributor comprises:
an inlet flow channel interface connected to the inlet flow channel;
a first inlet interface and a second inlet interface, which are in fluid communication with the inlet flow channel interface and connected to the first inlet and the second inlet, respectively;
an outlet flow channel interface connected to the outlet flow channel; and
a first outlet interface and a second outlet interface, which are in fluid communication with the outlet flow channel interface and connected to the first outlet and the second outlet, respectively.

3. The cooling system as claimed in claim 2, **characterized in that** the distributor further comprises:
a first inlet distribution flow channel connected to the first inlet interface;
a second inlet distribution flow channel connected to the second inlet interface;
a first outlet distribution flow channel connected to the first outlet interface; and
a second outlet distribution flow channel connected to the second outlet interface,
wherein an angle is formed between the first inlet distribution flow channel and the second inlet distribution flow channel, and an angle is formed between the first outlet distribution flow channel and the second outlet distribution flow channel.

4. The cooling system as claimed in claim 2, **characterized by** further comprising a sealing block, wherein the inlet flow channel and the outlet flow channel are connected to the inlet flow channel interface and the outlet flow channel interface, respectively, via pipelines in the sealing block.

5. The cooling system as claimed in claim 3, **characterized in that**
the first set of cooling plates and the second set of cooling plates each comprise a plurality of cooling plates arranged spaced apart in a first direction, each of the cooling plates extending in a second direction perpendicular to the first direction, and the distributor is located between the first set of cooling plates and the second set of cooling plates in the first direction.

6. The cooling system as claimed in claim 5, **characterized in that**
the first set of cooling plates comprises a first cooling plate and a second cooling plate, wherein the first cooling plate and the second cooling plate are arranged adjacent to each other, the first cooling plate is connected to the first inlet, and the second cooling plate is connected to the first outlet.

7. The cooling system as claimed in claim 6, **characterized in that**
the first set of cooling plates further comprises a third cooling plate, a fourth cooling plate, a fifth cooling plate, and a sixth cooling plate, wherein the third cooling plate and the fourth cooling plate are arranged adjacent to each other and connected in parallel to each other, and the fifth cooling plate and the sixth cooling plate are arranged adjacent to each other and connected in parallel to each other.

8. The cooling system as claimed in claim 7, **characterized in that** the first cooling plate is connected in series with the fifth cooling plate and the sixth cooling plate, the fifth cooling plate and the sixth cooling plate are connected in series with the third cooling plate and the fourth cooling plate, and the third cooling plate and the fourth cooling plate are connected in series with the second cooling plate.

9. The cooling system as claimed in claim 5, **characterized in that** the cooling plate has a corrugated structure.

10. The cooling system as claimed in any one of claims 1 to 9, **characterized in that** the first set of cooling plates is arranged symmetrically with the second set of cooling plates.

11. The cooling system as claimed in any one of claims 1 to 9, **characterized in that** the cooling medium is in a gas-liquid mixed state within the inlet flow channel and in a gaseous state within the outlet flow channel.

12. A vehicle, **characterized by** comprising a cooling system as claimed in any one of claims 1 to 11.
